# EUROPEAN PATENT APPLICATION

(11) **EP 4 751 998 A1**
(43) Date of publication of application: **03.06.2026**
(21) Application number: 24845703.8
(22) Date of filing: 26.07.2024
(51) Int. Cl.: B60Q 1/08, B60Q 1/24, B60Q 1/26

(54) **CONTROL DEVICE, VEHICLE LAMP SYSTEM, AND NON-TRANSITORY COMPUTER-READABLE MEDIUM**

(30) Priority: 27.07.2023 JP 2023122851; 04.08.2023 JP 2023128129
(71) Applicant: Koito Manufacturing Co., Ltd., Tokyo 141-0001 (JP)
(72) Inventor: NAKATANI Ryota, Shizuoka-shi, Shizuoka 424-8764 (JP); SAWADA Hirotaka, Shizuoka-shi, Shizuoka 424-8764 (JP)
(74) Representative: Grünecker Patent- und Rechtsanwälte PartG mbB
(86) International application number: PCT/JP2024/026858
(87) International publication number: WO 2025/023329

(57) **Abstract**

A control device (100) controls a vehicle lamp capable of emitting a light distribution pattern in an area in front of a vehicle. The control device (100) includes a control unit that controls the emission of the light distribution pattern. The control unit controls the driving of the vehicle lamp such that the light distribution pattern determined by the content of a road sign mark included in a captured image obtained by capturing an image of an area in front of the vehicle is emitted.

## Description

### TECHNICAL FIELD

The present disclosure relates to a vehicle lamp, a vehicle lamp system, and a non-transitory computer-readable medium with a stored program.

### BACKGROUND ART

In the related art, a vehicle equipped with a camera for capturing an image of a region in front of the vehicle has been proposed. In addition, a device for recognizing the content of a road sign by using an image from the camera has been developed. For example, Patent Literature 1 discloses a road sign recognition device for a vehicle that determines the presence or absence of a road sign in an image captured by a camera, and when it is determined that the road sign is present, calculates a position of the road sign and controls an emission direction of a vehicle illumination device such that illumination light is directed to the calculated position of the road sign. According to this device, a driver can easily visually recognize the road sign.

In addition, a vehicle lamp has been proposed that is capable of, when a host vehicle intrudes into a corner in which a blind spot exists, notifying a pedestrian or another vehicle present in the blind spot in the corner of intrusion of the host vehicle. For example, the vehicle lamp disclosed in Patent Literature 2 includes a variable light distribution type lamp unit, an object detection signal acquisition unit that acquires an object detection signal around a vehicle, and a variable light distribution control unit that adjusts an emission region and an emission light amount of the variable light distribution type lamp unit based on the acquired object detection signal. The variable light distribution type lamp unit emits light to a detected traffic mirror based on an object detection signal of the traffic mirror around the vehicle. Accordingly, a reflected light for intrusion notification is emitted in a wider range than that of the blind spot.

### CITATION LIST

### PATENT LITERATURE

Patent Literature 1: JP2020-121615A
Patent Literature 2: WO2023/054054A1

### SUMMARY OF INVENTION

### TECHNICAL PROBLEM

However, the road sign recognition device disclosed in Patent Literature 1 can improve visibility of the road sign for the driver. However, the driver needs to manually switch a light distribution of the vehicle lamp in order to understand the content of the sign and perform an appropriate light distribution according to a vehicle traveling environment. In this case, since a timing of switching the light distribution is delayed or a switching operation is complicated, there is room for further improvement from the viewpoint of improvement in convenience for the driver.

A first object of the present disclosure is to provide a new technique for achieving appropriate light distribution control according to a traveling environment.

In addition, in order for the vehicle lamp disclosed in Patent Literature 2 to notify the pedestrian or the like present in the blind spot in the corner of the host vehicle, the traffic mirror needs to be present at the corner. In other words, this technique is difficult to be used at a corner in which no traffic mirror is present, an intersection with poor visibility, or the like.

A second object of the present disclosure is to provide a technique that allows a pedestrian to easily recognize the presence of a host vehicle at an intersection with poor visibility or the like.

### SOLUTION TO PROBLEM

In order to solve the above problems, a control device according to an aspect of the present disclosure is a control device for controlling a vehicle lamp configured to emit a light distribution pattern in a region in front of a vehicle, and that includes a controller configured to control emission of the light distribution pattern. The controller is configured to control driving of the vehicle lamp such that the light distribution pattern is emitted, the light distribution pattern being determined based on the content of a mark on a road sign included in a captured image obtained by capturing the region in front of the vehicle.

According to this aspect, it is possible to achieve a control device capable of performing emission control of an appropriate light distribution pattern according to a road condition in front of the vehicle that is estimated based on the content of the mark on the road sign.

Another aspect of the present disclosure is a vehicle lamp system. The vehicle lamp system includes a vehicle lamp configured to emit a light distribution pattern in a region in front of a vehicle, and a controller configured to control emission of the light distribution pattern. The controller is configured to control driving of the vehicle lamp such that the light distribution pattern is emitted, the light distribution pattern being determined based on the content of a mark on a road sign included in a captured image obtained by capturing the region in front of the vehicle.

According to this aspect, it is possible to emit an appropriate light distribution pattern according to a road condition in front of the vehicle that is estimated based on the content of the mark on the road sign.

Still another aspect of the present disclosure is a non-transitory computer-readable medium with a stored program. By executing the program, a controller is configured to control emission of a light distribution pattern to be formed in a region in front of a vehicle by a vehicle lamp. Further, by executing the program, the controller is configured to control driving of the vehicle lamp such that the light distribution pattern is emitted, the light distribution pattern being determined based on the content of a mark on a road sign included in a captured image obtained by capturing the region in front of the vehicle.

According to this aspect, it is possible to cause the controller controlling the driving of the vehicle lamp to execute the program so as to emit an appropriate light distribution pattern according to a road condition in front of the vehicle that is estimated based on the content of the mark on the road sign.

Any combination of the above components, and conversions of expressions of the present disclosure between methods such as manufacturing methods and control methods, devices such as lamps, illumination, and control devices, light emitting modules, light sources, programs, and computer-readable recording media, are also valid aspects of the present disclosure.

In order to solve the above problems, a control device according to another aspect of the present disclosure is a control device for controlling a vehicle lamp configured to emit a road surface drawing pattern in a region in front of a vehicle, and that includes a controller configured to control emission of the road surface drawing pattern. The controller is configured to receive information indicating a road condition in front of the vehicle, determine visibility of the road condition, and determines the road surface drawing pattern, and in a case where the controller determines that the visibility is poor, the controller is configured to control driving of the vehicle lamp such that a second road surface drawing pattern is emitted, the second road surface drawing pattern being emitted to a position farther than a position to which a first road surface drawing pattern is emitted under a normal road condition.

According to this aspect, when it is discriminated that the visibility of the road condition is poor, the second road surface drawing pattern that is emitted to the farther position is emitted, so that a pedestrian can easily notice a host vehicle even at an intersection with poor visibility.

Another aspect of the present disclosure is a control device. The control device is a control device that controls a vehicle lamp configured to emit a road surface drawing pattern in a region in front of a vehicle, and that includes a controller configured to control emission of the road surface drawing pattern. The controller is configured to in a case where the controller receives information indicating a first road condition in front of the vehicle, output first instruction information indicating that the vehicle lamp emits a first road surface drawing pattern, and in a case where the controller receives a second road condition having lower visibility than a condition of the first road condition, output second instruction information indicating that the vehicle lamp emits a second road surface drawing pattern emitted to a farther position than the first road surface drawing pattern.

According to this aspect, when the controller receives the second road condition having the lower visibility than that of the first road condition, the second road surface drawing pattern that is emitted to the farther position is emitted, so that the pedestrian can easily notice the host vehicle even at the intersection with poor visibility.

Still another aspect of the present disclosure is a vehicle lamp system. The vehicle lamp system includes a vehicle lamp capable of emitting a road surface drawing pattern in a region in front of a vehicle, and a controller configured to control driving of the vehicle lamp such that the road surface drawing pattern is emitted. The controller receives information indicating a road condition in front of the vehicle, discriminates visibility of the road condition, and determines the road surface drawing pattern. When discriminating that the visibility is poor, the controller controls the driving of the vehicle lamp such that a second road surface drawing pattern, which is emitted to a farther position than a first road surface drawing pattern to be emitted under a normal road condition, is emitted.

According to this aspect, when it is discriminated that the visibility of the road condition is poor, the second road surface drawing pattern that is emitted to the farther position is emitted, so that the pedestrian can easily notice the host vehicle even at the intersection with poor visibility.

Still another aspect of the present disclosure is a non-transitory computer-readable medium with a stored program. By executing the program, a controller is configured to control emission of a road surface drawing pattern to be emitted in a region in front of a vehicle by a vehicle lamp. Further, by executing the program, the controller receives information indicating a road condition in front of the vehicle and determines visibility of the road condition. The controller executes a step of determining the road surface drawing pattern, and when discriminating that the visibility is poor, the controller controls the driving of the vehicle lamp such that a second road surface drawing pattern is emitted, the second road surface drawing pattern being emitted to a farther position than a position to which a first road surface drawing pattern is emitted under a normal road condition.

According to this aspect, it is possible to cause the controller controlling the driving of the vehicle lamp to execute the program such that when the controller discriminates that the visibility of the road condition is poor, the second road surface drawing pattern that is emitted to the farther position is emitted.

Any combination of the above components, and conversions of expressions of the present disclosure between methods such as manufacturing methods and control methods, devices such as lamps, illumination, and control devices, light emitting modules, light sources, programs, and non-transitory computer-readable media, are also valid aspects of the present disclosure.

### ADVANTAGEOUS EFFECTS OF INVENTION

According to the present disclosure, it is possible to achieve appropriate light distribution control according to a traveling environment.

Further, according to the present disclosure, a pedestrian can easily recognize the presence of a host vehicle at an intersection with poor visibility or the like.

### BRIEF DESCRIPTION OF DRAWINGS

[FIG. 1] FIG. 1 is a block diagram illustrating a vehicle lamp system according to a first embodiment.
[FIG. 2] FIG. 2 is a diagram schematically illustrating an example of a first light distribution pattern formed by the vehicle lamp system.
[FIG. 3A] FIG. 3A is a diagram illustrating an example of a warning sign.
[FIG. 3B] FIG. 3B is a diagram illustrating an example of the warning sign.
[FIG. 3C] FIG. 3C is a diagram illustrating an example of the warning sign.
[FIG. 3D] FIG. 3D is a diagram illustrating an example of the warning sign.
[FIG. 4] FIG. 4 is a diagram illustrating an example of a captured image including a road condition in front of a vehicle.
[FIG. 5] FIG. 5 is a diagram illustrating an example of the captured image including the road condition in front of the vehicle.
[FIG. 6] FIG. 6 is a block diagram illustrating a vehicle lamp system according to a second embodiment.
[FIG. 7] FIG. 7 is a schematic diagram for explaining a T-junction with poor visibility.
[FIG. 8A] FIG. 8A is a diagram illustrating an example of a road sign indicating poor visibility.
[FIG. 8B] FIG. 8B is a diagram illustrating an example of the road sign indicating poor visibility.
[FIG. 8C] FIG. 8C is a diagram illustrating an example of the road sign indicating poor visibility.
[FIG. 8D] FIG. 8D is a diagram illustrating an example of the road sign indicating poor visibility.
[FIG. 8E] FIG. 8E is a diagram illustrating an example of the road sign indicating poor visibility.
[FIG. 8F] FIG. 8F is a diagram illustrating an example of the road sign indicating poor visibility.
[FIG. 9A] FIG. 9A is a schematic diagram illustrating an example in which a road surface drawing pattern is emitted in a direction in which a host vehicle turns.
[FIG. 9B] FIG. 9B is a schematic diagram illustrating another example in which a road surface drawing pattern is emitted in the direction in which the host vehicle turns.
[FIG. 9C] FIG. 9C is a schematic diagram illustrating an example in which a road surface drawing pattern is emitted on the front side of the host vehicle.
[FIG. 10] FIG. 10 is a diagram illustrating an example of the captured image including the road condition in front of the vehicle.
[FIG. 11] FIG. 11 is a schematic diagram illustrating a case in which a vehicle has parked between houses facing a road.
[FIG. 12] FIG. 12 is a diagram illustrating an example of the captured image including the road condition in front of the vehicle.

### DESCRIPTION OF EMBODIMENTS

Hereinafter, the present disclosure will be described based on preferred embodiments with reference to the drawings. The same or equivalent components, members, and processes illustrated in the drawings are denoted by the same reference numerals, and redundant descriptions thereof will be omitted as appropriate. The embodiments are illustrative rather than limiting the invention, and not all features and combinations thereof described in the embodiments are necessarily essential to the invention.

### (First Embodiment)

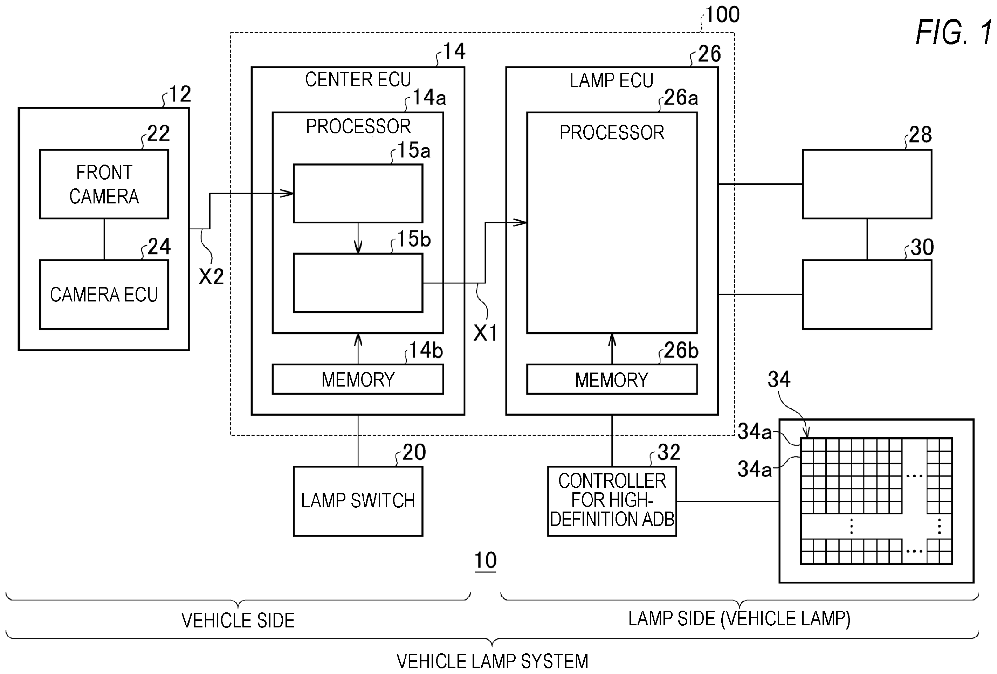

A vehicle lamp according to a first embodiment is a vehicle head lamp disposed in a front portion of a vehicle, and constitutes a vehicle lamp system when appropriately combined with various control units, sensors, and the like. First, a schematic configuration of the vehicle lamp system according to the first embodiment will be described. FIG. 1 is a block diagram illustrating the vehicle lamp system according to the first embodiment.

A vehicle lamp system 10 includes a camera unit 12 compatible with advanced driver-assistance systems (ADAS), a center ECU 14, and a lamp switch 20. The camera unit 12 includes a front camera 22 configured to capture an image of a region in front of the vehicle, and a camera ECU 24 configured to detect an object such as a sign or a vehicle present in front of the vehicle based on information in the captured image obtained by the front camera 22. The center ECU 14 includes a processor (an arithmetic unit) 14a configured to execute programs required for various controls, and a memory (a storage medium) 14b configured to store the programs. The camera unit 12 and the center ECU 14 according to the first embodiment are provided on a vehicle main body side, but the camera unit 12 and the center ECU 14 may be provided anywhere in the entire vehicle.

Further, the vehicle lamp system 10 includes a lamp ECU 26, a low beam lamp (Lo beam lamp) 28 and a high beam lamp (Hi beam lamp) 30 that are subjected to light distribution control performed by the lamp ECU 26, a controller 32 for high-definition adaptive driving beam (ADB), and an LED unit 34 for the high-definition ADB controlled by the controller 32. The lamp ECU 26 includes a processor 26a configured to execute programs required for various controls, and a memory 26b configured to store the programs. The lamp ECU 26 and the controller 32 according to the first embodiment are provided in any of the Lo beam lamp 28, the Hi beam lamp 30, and the LED unit 34, which are vehicle lamps.

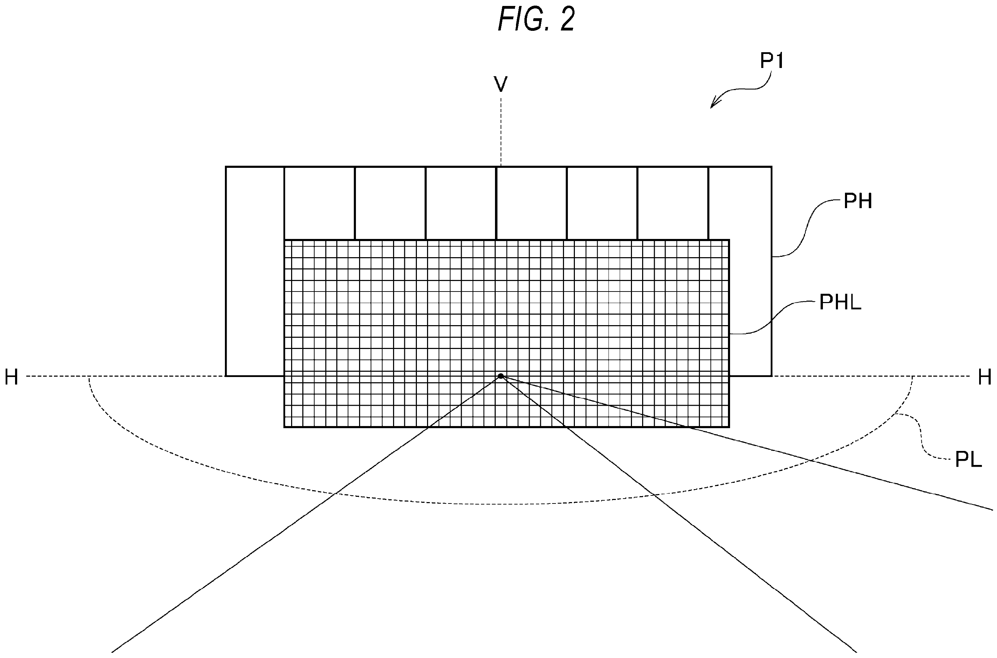

FIG. 2 is a diagram schematically illustrating an example of a first light distribution pattern formed by the vehicle lamp system. A first light distribution pattern P1 illustrated in FIG. 2 is a pattern in which a low-beam light distribution pattern PL formed by the Lo beam lamp 28, a high-beam light distribution pattern PH formed by the Hi beam lamp 30, and an ADB light distribution pattern PHL formed by the LED unit 34 overlap. At night, a host vehicle travels while illuminating the front of the vehicle with the first light distribution pattern P1 illustrated in FIG. 2 by each lamp provided in the vehicle lamp system 10.

For the Lo beam lamp 28, a light source or an optical member is appropriately selected to illuminate a vehicle vicinity region below an H-H line. For the Hi beam lamp 30, a light source or an optical member is appropriately selected to illuminate a distant region above the H-H line. In the Hi beam lamp 30, 8 LEDs are aligned in one direction, and a light distribution pattern in which a part of the high-beam light distribution pattern PH is blocked or dimmed can be formed by controlling turning on and off of each LED.

For the LED unit 34, a light source or an optical member is appropriately selected to illuminate a region centered on an intersection of the H-H line and a V line. The LED unit 34 is a vehicle lamp configured to illuminate a region in front of the vehicle with light emitted from the LED unit 34. The ADB light distribution pattern PHL is a light distribution pattern that overlaps both the low-beam light distribution pattern PL and the high-beam light distribution pattern PH with the intersection of the H-H line and the V line as a center. In addition, the LED unit 34 is configured to individually control drive currents of the LEDs to reduce or eliminate the drive current of a part of the LEDs. Therefore, some pixels of a matrix constituting the ADB light distribution pattern PHL can be in a blocked or dimmed state. Accordingly, the LED unit 34 can minimize a light blocking region when glare to a vehicle or a person in a range of the ADB light distribution pattern PHL is prevented, and can maintain visibility in other regions.

The LED unit 34 has a light source in which 64 LEDs 34a (light emitting regions) in a vertical direction and 256 LEDs 34a in a horizontal direction are arranged in a matrix shape. Driving of the LEDs 34a is individually controlled based on an instruction from the controller 32. In the LED unit 34, 20 or more light emitting elements may be arranged in a short side direction of the rectangle, and 100 or more light emitting elements may be arranged in a long side direction. In addition to the LED, an organic EL element, a liquid crystal shutter, a MEMS mirror, or the like can also be applied as the light source as long as the matrix-shaped light emitting regions can be individually turned on and off.

The controller 32 is configured to form a plurality of light distribution patterns, in which the brightness of a partial region is different, by changing an illumination state of a part of light emitting regions among the plurality of light emitting regions. In other words, the controller 32 is configured to control the vehicle lamp to perform illumination with a selected light distribution pattern by controlling an amount of light emitted from each of the plurality of light emitting regions. Accordingly, various light distribution patterns can be formed by one LED unit 34. Further, even if there are a plurality of partial regions in each of which a reflection object is present, the controller 32 can form light distribution patterns in which the brightness of each partial region is adjusted.

As illustrated in FIG. 1, a control device 100 according to the first embodiment may include the center ECU 14, the camera ECU 24, and the lamp ECU 26. Further, when a desired function can be achieved by only the center ECU 14, the center ECU 14 can be used alone as the control device 100. In this case, the processor 14a corresponds to a control unit. Further, when the desired function can be achieved by only the lamp ECU 26, the lamp ECU 26 can be used alone as the control device 100. In this case, the processor 26a corresponds to the control unit. A combination of components at the time of constituting the control device according to the first embodiment or the control unit is not particularly limited.

The control device 100 is configured to control the vehicle lamps (the Lo beam lamp 28, the Hi beam lamp 30, and the LED unit 34) configured to emit a light distribution pattern in a region in front of the vehicle. Specifically, when receiving instruction information X1 on the light distribution pattern determined by the processor 14a, the processor 26a outputs a control signal (a supply voltage or image data) corresponding to the instruction information X1 to each lamp or the controller.

On the other hand, the center ECU 14, which receives image information X2 obtained by capturing an image of the region in front of the vehicle by the camera unit 12, includes a identifying unit 15a and a determination unit 15b. The identifying unit 15a is configured to identifying the content of a mark on a road sign included in the image information X2. The determination unit 15b is configured to determine a predetermined light distribution pattern corresponding to the discriminated content of the mark on the road sign, and transmit the above instruction information X1. Accordingly, the control device 100 can control driving of each lamp such that a desired light distribution pattern is emitted according to the content of the mark on the road sign present in front of the vehicle. That is, the control device 100 is capable of performing emission control of an appropriate light distribution pattern according to a road condition in front of the vehicle that is estimated based on the content of the mark on the road sign present in front of the vehicle.

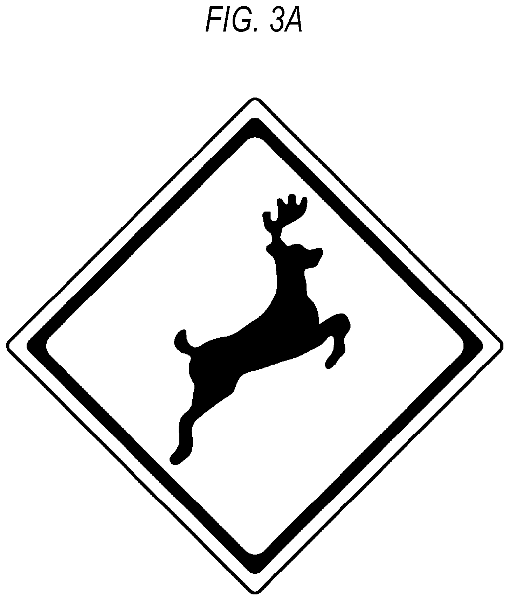

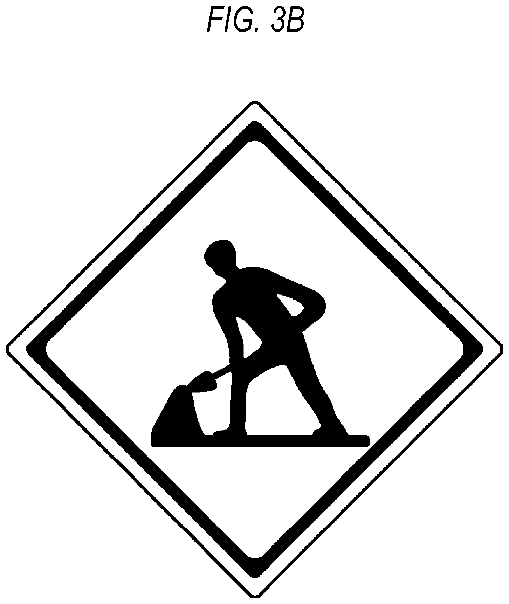

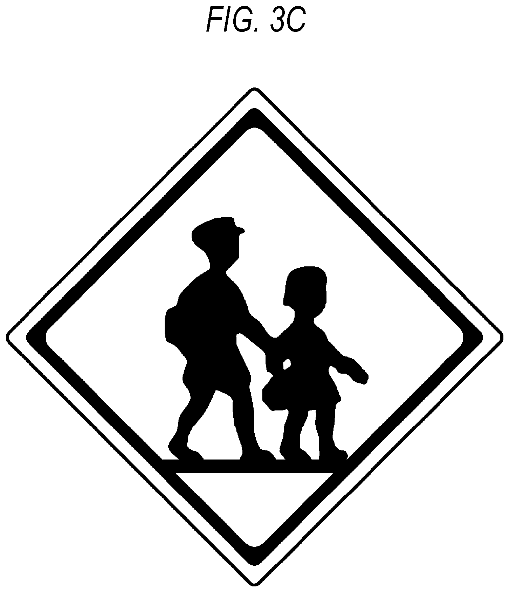

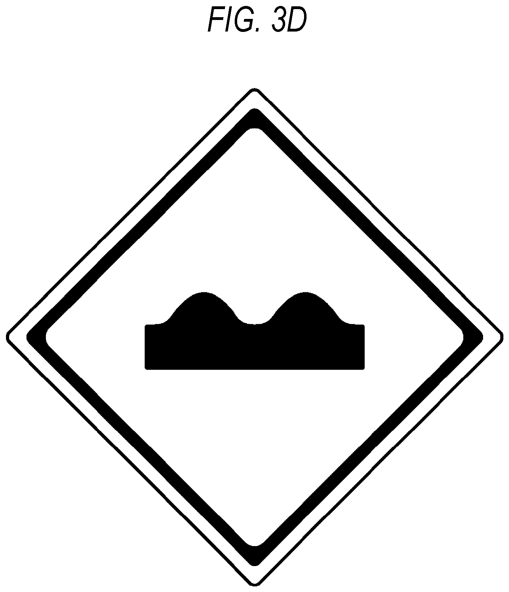

The road sign that can be used to estimate the road condition in front of the vehicle is, for example, a warning sign. The warning sign is a sign for attracting attention or notifying a driver of a danger on a road in advance. FIG. 3A to FIG. 3D are diagrams each illustrating an example of the warning sign. The mark on the warning sign illustrated in FIG. 3A represents the content of "wild animals crossing", the mark on the warning sign illustrated in FIG. 3B represents the content of "roadworks", the mark on the warning sign illustrated in FIG. 3C represents the content of "children crossing", and the mark on the warning sign illustrated in FIG. 3D represents the content of "bumpy road". In addition, there are warning signs on which marks representing various contents such as an intersection shape and a road shape are drawn, and the road condition in front of the vehicle can be estimated in advance based on the warning signs.

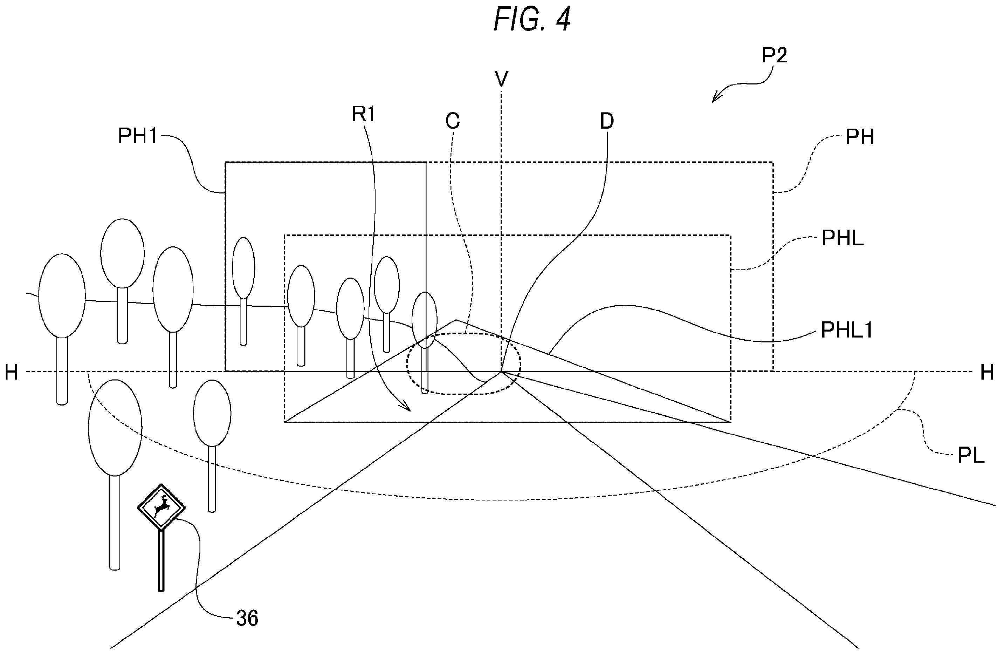

FIG. 4 is a diagram illustrating an example of a captured image including a road condition in front of the vehicle. A road sign 36 illustrated in FIG. 4 is drawn with a mark representing the content that an animal illustrated in FIG. 3A may cross.

The identifying unit 15a of the control device 100 according to the first embodiment is configured to identifies the content of the mark on the road sign 36 based on the captured image. Then, the determination unit 15b is configured to determine an appropriate light distribution pattern based on the identified content of the mark on the road sign 36, and transmit the instruction information X1 to the lamp ECU 26. In the case illustrated in FIG. 4, the identifying unit 15a identifies that the road sign 36 is a warning sign for causing the driver to recognize a possibility that an object jumps out from a road shoulder to a road.

The lamp ECU 26 that has received the instruction information X1 controls driving of the vehicle lamp such that a road shoulder light distribution pattern P2, which has a wider range for illumination on a road shoulder R1 side than that of the low-beam light distribution pattern PL or the high-beam light distribution pattern PH, is emitted. Specifically, the lamp ECU 26 is configured to control the Lo beam lamp 28 to emit the low-beam light distribution pattern PL. In addition, the lamp ECU 26 is configured to control driving of each LED of the Hi beam lamp 30 such that a left region PH1 of the high-beam light distribution pattern PH among the plurality of LEDs of the Hi beam lamp 30 is emitted. Further, the lamp ECU 26 is configured to control driving of each LED 34a of the LED unit 34 such that of the ADB light distribution pattern PHL whose shape can be variously changed with high definition, a triangular region PHL1 including a vanishing point D is emitted.

The left region PH1 includes a slope of a mountain. Further, the triangular region PHL1 includes a region including the road shoulder in front of the vehicle. Therefore, it is more likely to quickly find the object that runs down the slope of the mountain and jumps out from the road shoulder to the road. Here, examples of the object include animals and falling rocks. Further, as the case in which the object jumps out from the road shoulder to the road, a case in which there is a mountain or a cliff outside the road shoulder as illustrated in FIG. 4 is exemplified. When the road sign illustrated in FIG. 3C is present in front of the vehicle, a case in which a child jumps out from an intersection with poor visibility is assumed. Also in this case, by illuminating the vicinity of the intersection with the road shoulder light distribution pattern P2, it is more likely to quickly find the child who jumps out from the road shoulder to the road.

Further, the lamp ECU 26 according to the first embodiment is configured to control driving of the Hi beam lamp 30 and the LED unit 34 such that the road shoulder light distribution pattern P2 is emitted brighter than the low-beam light distribution pattern PL or the high-beam light distribution pattern PH. Since the LED unit 34 includes a large number of LEDs 34a arranged in a matrix shape, a region along a shape of the light distribution pattern corresponding to the content of the mark on the road sign can be selectively brighter than the surroundings. For example, the controller 32 controls driving of the LEDs 34a that illuminate a road center region C such that the luminance of the road center region C including the vanishing point D increases. Accordingly, the driver is more likely to early and more accurately recognize the object jumping out from a road shoulder R to the road.

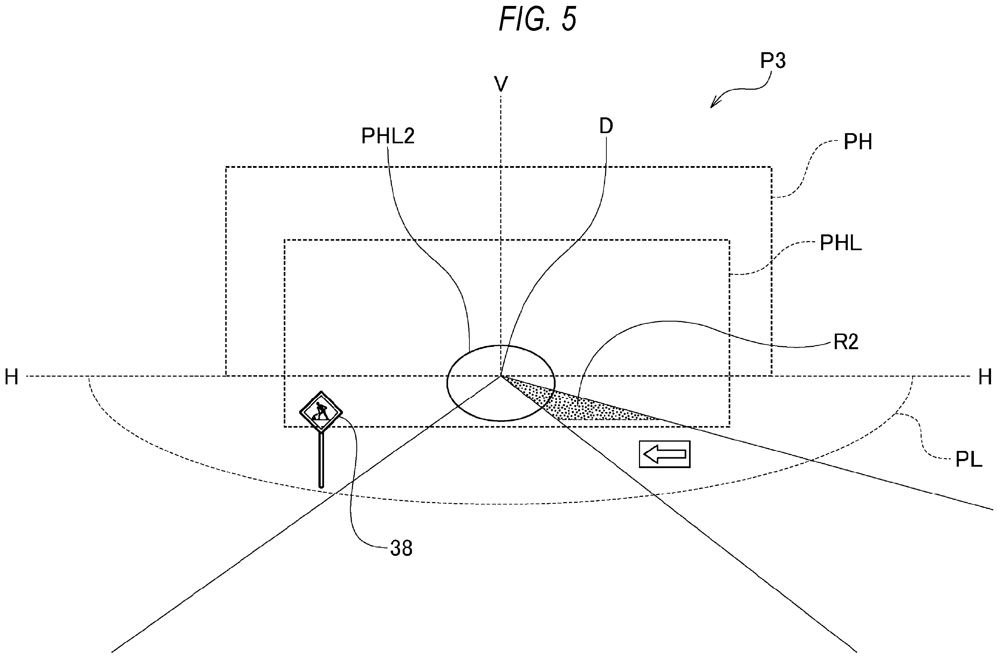

FIG. 5 is a diagram illustrating an example of the captured image including the road condition in front of the vehicle. A road sign 38 illustrated in FIG. 5 is drawn with a mark representing the content of roadworks illustrated in FIG. 3B.

The identifying unit 15a is configured to identify the content represented by the mark on the road sign 38 included in the captured image. Then, the determination unit 15b is configured to determine an appropriate light distribution pattern based on the identified content of the mark on the road sign 38, and transmit the instruction information X1 to the lamp ECU 26. In the case illustrated in FIG. 5, the identifying unit 15a identifies that the road sign 38 is a warning sign for causing the driver to recognize a situation requiring attention to traveling on the road in front of the vehicle. Specifically, the situation refers to a situation in which an oncoming lane region R2 in front of the vehicle is under construction.

The lamp ECU 26 that has received the instruction information X1 controls the driving of the vehicle lamp such that a distant light distribution pattern P3, which is emitted in a farther region than that of the low-beam light distribution pattern PL, is emitted. Specifically, the lamp ECU 26 is configured to control the Lo beam lamp 28 to emit the low-beam light distribution pattern PL. In addition, the lamp ECU 26 is configured to control the Hi beam lamp 30 to emit the high-beam light distribution pattern PH. Further, the lamp ECU 26 is configured to control the driving of each LED 34a of the LED unit 34 such that of the ADB light distribution pattern PHL, an elliptical region PHL2 including the vanishing point D is emitted.

The elliptical region PHL2 includes a boundary portion between a traveling lane of the host vehicle and an oncoming lane. Further, the lamp ECU 26 according to the first embodiment is configured to control the driving of the LED unit 34 such that the distant light distribution pattern P3 is emitted brighter than the low-beam light distribution pattern PL or the high-beam light distribution pattern PH. Therefore, the situation of the oncoming lane region R2 under construction at a farther position in front of the vehicle is more likely to be quickly recognized. Also in a case in which the road sign illustrated in FIG. 3D and drawn with the mark representing the content of the bumpy road is detected, the lamp ECU 26 controls each lamp to emit the distant light distribution pattern P3 in the region in front of the vehicle.

As described above, the vehicle lamp system 10 according to the first embodiment can achieve appropriate light distribution control according to a traveling environment.

The invention of the vehicle lamp system according to the first embodiment may be regarded as an invention of a single control device including a control unit. Further, the invention may also be regarded as an invention of a program to be executed by a controller that controls a vehicle lamp. This program is a program to be executed by the lamp ECU 26 or the center ECU 14 that controls emission of the light distribution pattern formed in front of the vehicle by the vehicle lamp. Further, by executing the program, the lamp ECU 26 or the center ECU 14 executes a step of controlling the driving of the vehicle lamp such that the light distribution pattern, which is determined based on the content of the mark on the road sign included in the captured image obtained by capturing the region in front of the vehicle, is emitted.

### (Second Embodiment)

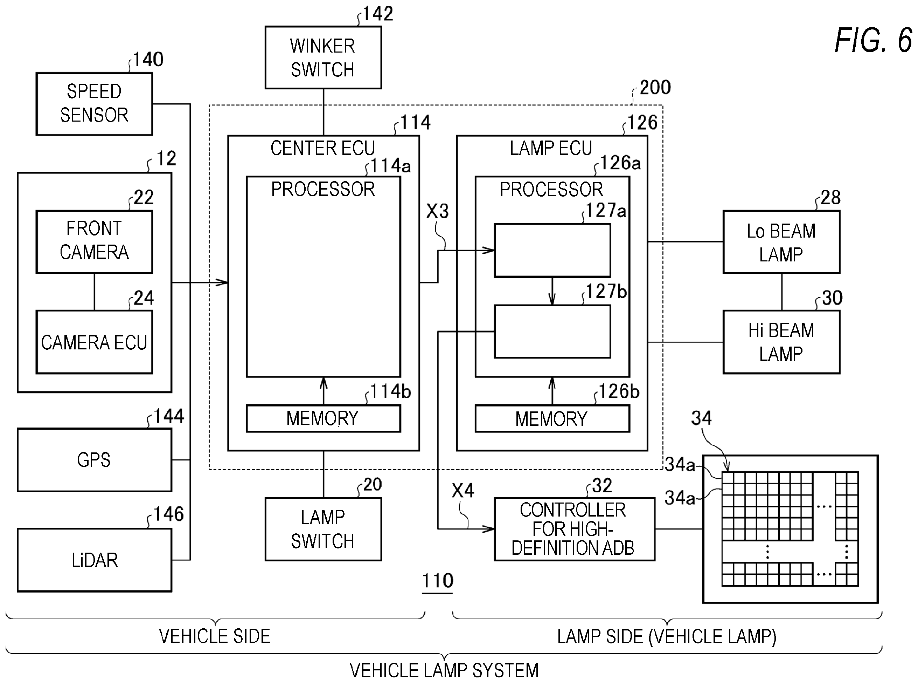

A vehicle lamp according to a second embodiment is a vehicle head lamp disposed in a front portion of a vehicle, and constitutes a vehicle lamp system when appropriately combined with various control units, sensors, and the like. First, a schematic configuration of the vehicle lamp system according to the second embodiment will be described. FIG. 6 is a block diagram illustrating the vehicle lamp system according to the second embodiment.

Similarly to the vehicle lamp system 10 according to the first embodiment, a vehicle lamp system 110 according to the second embodiment includes a center ECU 114 including a processor 114a and a memory 114b, and a lamp ECU 126 including a processor 126a and a memory 126b. A first light distribution pattern formed by the vehicle lamp system 110 according to the second embodiment is equivalent to the first light distribution pattern formed by the vehicle lamp system 10 according to the first embodiment, which is illustrated in FIG. 2.

The vehicle lamp system 110 according to the second embodiment is different from the vehicle lamp system 10 according to the first embodiment in that the processor 114a of the center ECU 114 does not include the identifying unit 15a and the determination unit 15b, but the processor 126a of the lamp ECU 126 includes a identifying unit 127a and a determination unit 127b.

Further, the vehicle lamp system 110 according to the second embodiment includes a speed sensor 140, a winker switch 142, a global positioning system (GPS) 144, and a laser imaging detection and ranging (LiDAR) 146. The vehicle lamp system 110 according to the second embodiment may include a millimeter wave radar in addition to or instead of the LiDAR 146. The speed sensor 140 is configured to output information on a speed of the host vehicle to the center ECU 114. The winker switch 142 is configured to output information on a right-turning operation or a left-turning operation by the driver to the center ECU 114.

As illustrated in FIG. 6, a control device 200 according to the second embodiment may include the center ECU 114, the camera ECU 24, and the lamp ECU 126. Further, when a desired function can be achieved by only the center ECU 114, the center ECU 114 can be used alone as the control device 200. In this case, the processor 114a corresponds to the controller. Further, when the desired function can be achieved by only the lamp ECU 126, the lamp ECU 126 can be used alone as the control device 200. In this case, the processor 126a corresponds to the controller. A combination of components at the time of constituting the control device or the controller according to the second embodiment is not particularly limited.

The control device 200 according to the second embodiment is configured to control the vehicle lamps (the Lo beam lamp 28, the Hi beam lamp 30, and the LED unit 34) configured to emit a light distribution pattern in the region in front of the vehicle. In addition to various light distribution patterns, the LED unit 34 according to the second embodiment can emit a road surface drawing pattern to be drawn on a front road surface or a lateral road surface in front of the vehicle based on information notified to traffic participants such as other vehicles and pedestrians present around the host vehicle. Specifically, when receiving road information X3 indicating a road condition determined by the processor 114a, the processor 126a outputs a control signal (instruction information X4 on the road surface drawing pattern such as a supply voltage or image data) corresponding to the road information X3 to each lamp or the controller. Accordingly, regions along shapes of various road surface drawing patterns can be selectively brighter than the surroundings.

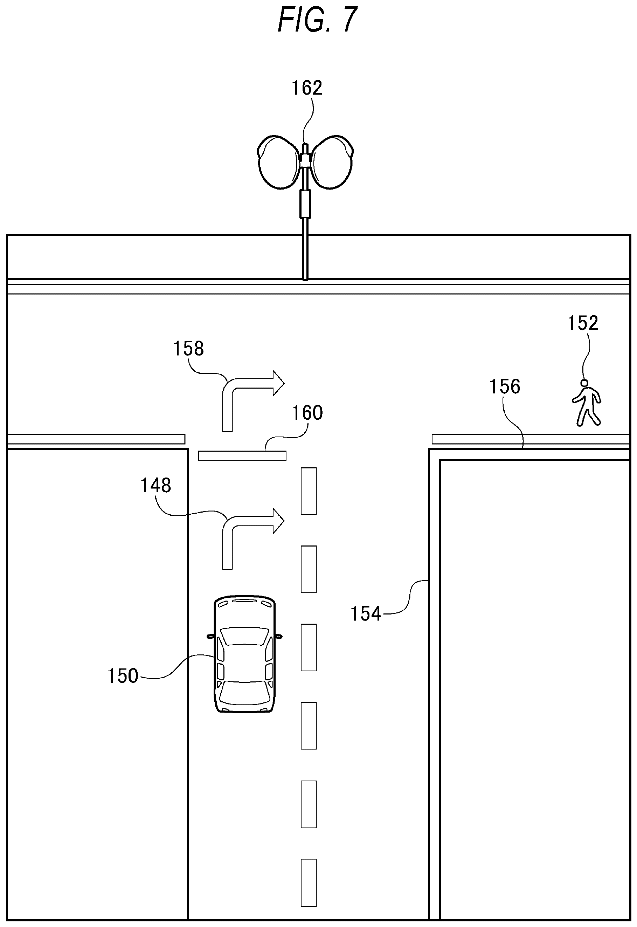

FIG. 7 is a schematic diagram for explaining a T-junction with poor visibility. The vehicle lamp system 110 according to the second embodiment is configured to illuminate a region in front of a host vehicle 150 with an arrow 148 for notifying a traffic participant of right-turning in front of the vehicle at the time of right-turning, as the first road surface drawing pattern. When this road condition including the T-junction is a normal road condition without poor visibility, a pedestrian 152 easily notices the arrow 148. However, when a wall 154 on the right side of the host vehicle 150 or a wall 156 on the left side of the pedestrian 152 is high, it is difficult for the pedestrian 152 to recognize the arrow 148. Therefore, it is difficult for the pedestrian 152 to notice the host vehicle 150 until both the host vehicle 150 and the pedestrian 152 approach an intersection.

Therefore, the processor 126a receives the road information X3 indicating the road condition in front of the vehicle, determines the visibility of the road condition by the identifying unit 127a, and determines the instruction information X4 on the road surface drawing pattern by the determination unit 127b. When it is determined that the visibility is poor, the processor 126a controls the driving of the LED unit 34 such that an arrow 158, which is emitted to a farther position than the arrow 148 to be emitted under the normal road condition, is emitted as a second road surface drawing pattern.

As described above, in a case where the identifying unit 127a determines that the visibility of the road condition is poor based on the road information X3, the control device 200 outputs the instruction information X4 from the determination unit 127b. The controller 32 that has received the instruction information X4 is configured to control the driving of the LED unit 34 such that the arrow 158 is emitted to the farther position than the arrow 148. Accordingly, the pedestrian 152 is more likely to notice the host vehicle 150 even at the intersection with poor visibility as illustrated in FIG. 7. The arrow 158 may be emitted to an intersecting road in front of (for example, about 2 m in front of) a stop line 160. Accordingly, the pedestrian 152 is more likely to notice the host vehicle 150.

Examples of information indicating the road condition in front of the vehicle include image-capturing information acquired by the camera unit 12, vehicle position information acquired by the GPS 44, and distance-measuring information on a distance to an object around the vehicle that is acquired by the LiDAR 146. The control device 200 is configured to control the driving of the vehicle lamp such that the road surface drawing pattern, which is selected according to the visibility determined based on the information indicating the road condition, is emitted. Accordingly, the accuracy for determining the visibility of the road condition is improved.

Specifically, when the camera unit 12 captures an image of a region in front of the host vehicle 150 at the T-junction illustrated in FIG. 7, a traffic mirror 162 is included in the captured image. The traffic mirror 162 is a target indicating the poor visibility, and the processor 126a causes the identifying unit 127a to determine that the visibility is poor when the traffic mirror 162 is detected from the road information X3 including the captured image. Accordingly, the visibility can be determined by general object recognition using a camera.

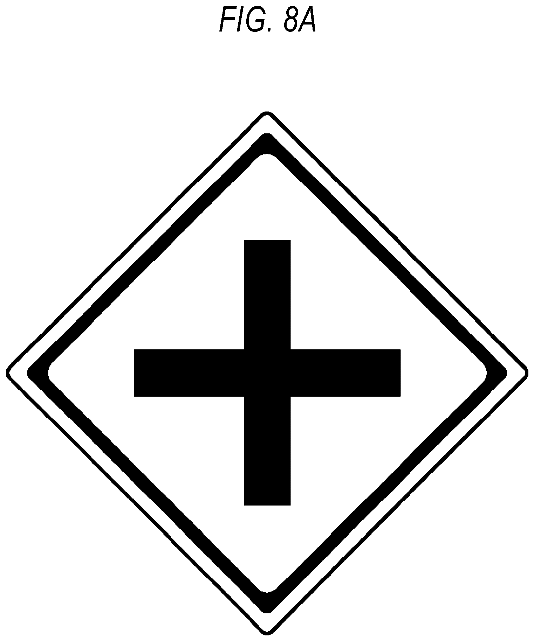

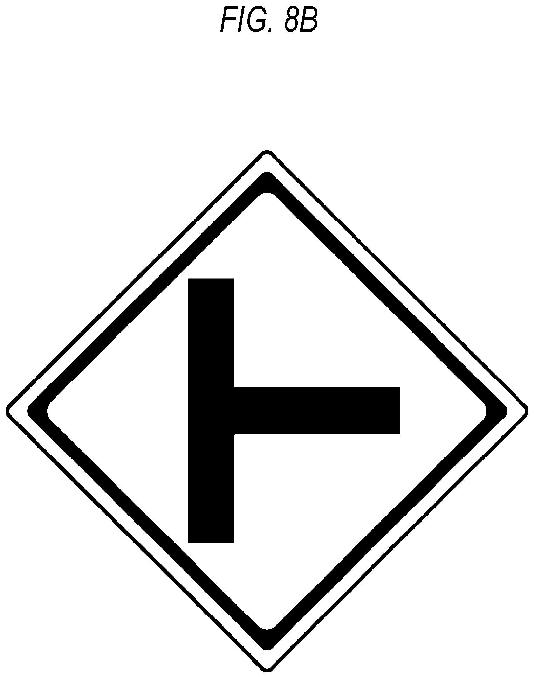

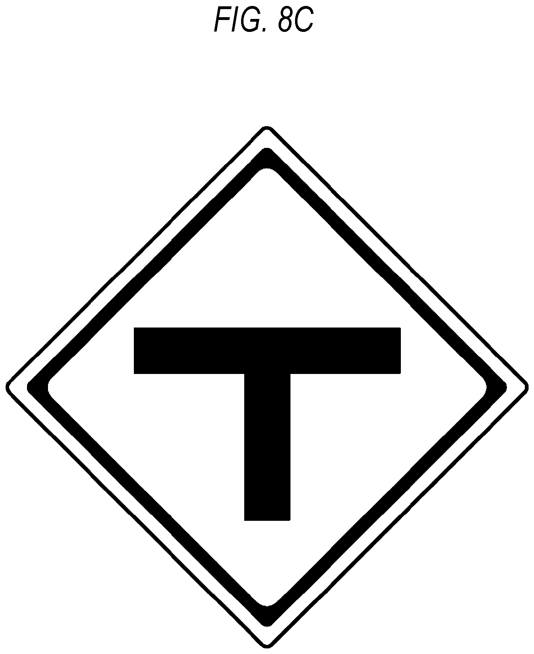

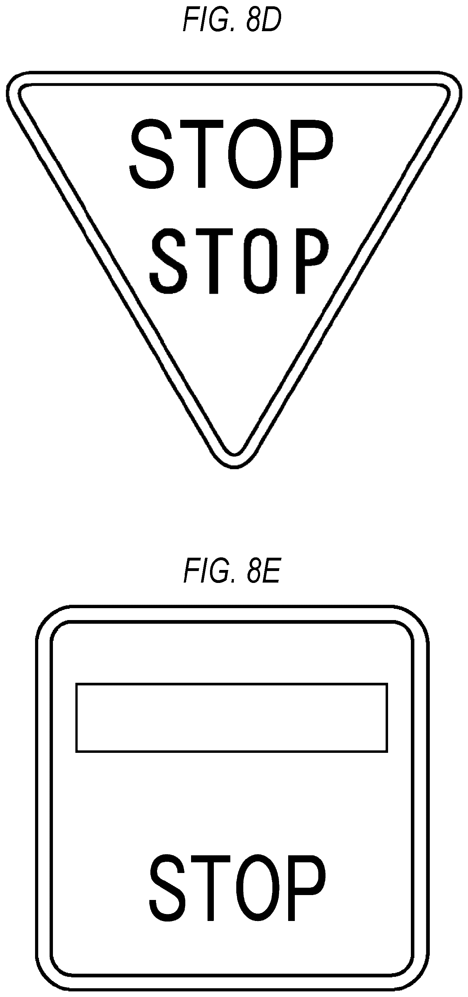

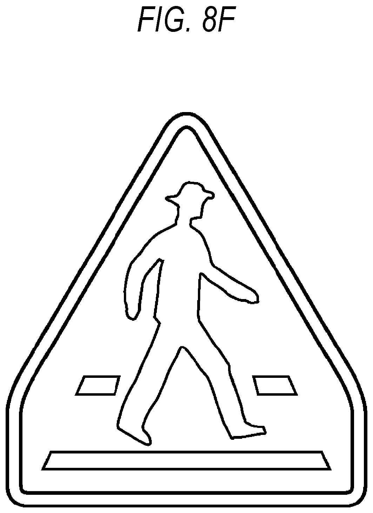

In addition to the traffic mirror 162, there are targets indicating poor visibility. FIG. 8A to FIG. 8F are diagrams each illustrating an example of a road sign indicating poor visibility. The mark on each of the warning signs illustrated in FIG. 8A to FIG. 8C indicates the content of "a road intersection having a predetermined shape". The mark on the regulation sign illustrated in FIG. 8D indicates the content of "temporary stop". The mark on the instruction sign illustrated in FIG. 8E indicates the content of "stop line". The mark of the instruction sign illustrated in FIG. 8F indicates the content of "crosswalk".

When such a road sign is included in the captured image, it is estimated that the visibility of the road condition in front of the vehicle is poor, and thus the processor 126a causes the identifying unit 127a to determine that the visibility is poor. In addition, when there is a region in which the height of a wall or a house on a roadside is 2 m or more, which is determined by image analysis using the captured image, the processor 126a may determine that the visibility is poor in the vicinity of the wall or the house.

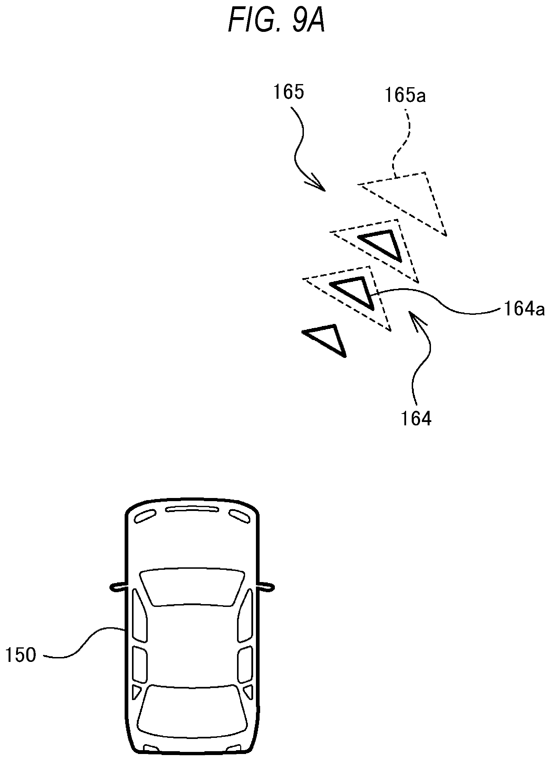

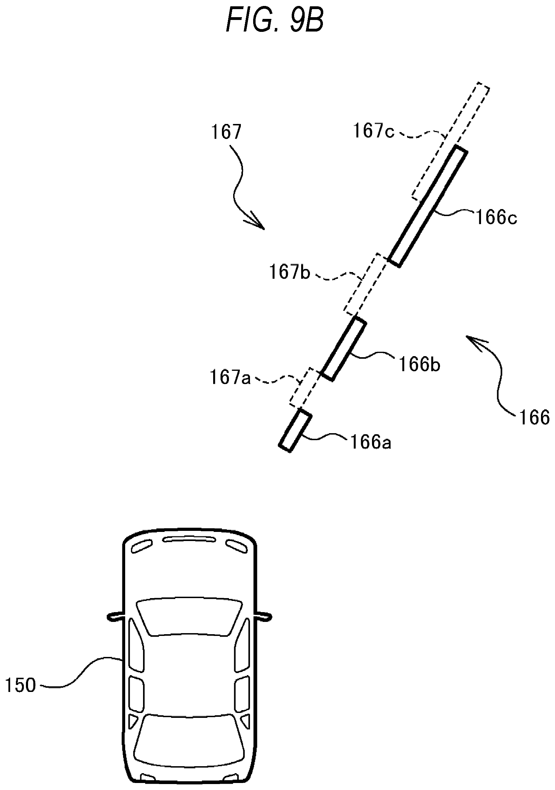

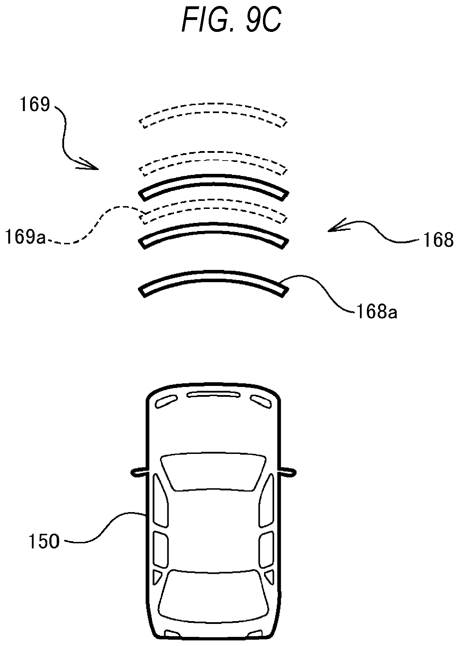

Next, other examples of the road surface drawing pattern will be described. FIG. 9A is a schematic diagram illustrating an example in which a road surface drawing pattern is emitted in a direction in which the host vehicle turns. FIG. 9B is a schematic diagram illustrating another example in which a road surface drawing pattern is emitted in the direction in which the host vehicle turns. FIG. 9C is a schematic diagram illustrating an example in which a road surface drawing pattern is emitted on the front side of the host vehicle.

In a normal first road surface drawing pattern 164 illustrated in FIG. 9A, the same triangles 164a are arranged at equal intervals. When it is determined that the visibility of the road condition is poor, the control device 200 controls the driving of the LED unit 34 such that a second road surface drawing pattern 165 including triangles 165a larger than the triangles 164a is emitted to a farther position. Accordingly, by emitting the second road surface drawing pattern 165 whose shape is changed with respect to the first road surface drawing pattern 164, the second road surface drawing pattern 165 is emitted to the farther position, and the pedestrian is more likely to notice the host vehicle 150. The change of the shape includes not only size, length, aspect ratio, and the number of formed shapes, but also a change and a modification of a pattern or a character.

In a normal first road surface drawing pattern 166 illustrated in FIG. 9B, rectangular shapes 166a, 166b, and 166c, which respectively have a longer length as a distance increases, are arranged on a straight line. When it is determined that the visibility of the road condition is poor, the control device 200 controls the driving of the LED unit 34 such that a second road surface drawing pattern 167 including rectangular shapes 167a, 167b, and 167c, which are similar to the rectangular shapes 166a, 166b, and 166c and are located at farther positions, respectively, is emitted to a farther position. In addition, in the second road surface drawing pattern 167, the rectangular shapes 167a, 167b, and 167c are sequentially emitted from a host vehicle side (sequential lighting). Accordingly, the dynamically emitted second road surface drawing pattern 167 is emitted to the farther position than the statically emitted first road surface drawing pattern 166, so that the pedestrian is more likely to notice the host vehicle 150.

Other examples of dynamic emission of the second road surface drawing pattern include a change in an interval between turning on and off, a change in color, and a periodical change in shape.

In a normal first road surface drawing pattern 168 illustrated in FIG. 9C, the same arc shapes 168a are arranged at equal intervals on the front side of the host vehicle 150. When it is determined that the visibility of the road condition is poor, the control device 200 controls the driving of the LED unit 34 such that a second road surface drawing pattern 169 including arc shapes 169a similar to the arc shapes 168a is emitted to a farther position. Accordingly, the second road surface drawing pattern 169 is emitted to the farther position than the first road surface drawing pattern 168, so that the pedestrian is more likely to notice the host vehicle 150. Further, for example, when the host vehicle 150 travels straight at an intersection with an intersecting road with poor visibility, the second road surface drawing pattern 169 can make it easy for a pedestrian present on the intersecting road with poor visibility to notice the presence of the host vehicle 150.

In the second embodiment, the first road surface drawing pattern is emitted 2 to 4 m in front of the vehicle, and the second road surface drawing pattern is emitted 3 to 5 m in front of the vehicle, but the road surface drawing pattern according to the present disclosure may be emitted at a position different from these ranges.

When receiving, in a state of determining that the visibility is poor, a signal indicating traveling at a predetermined speed (a speed that enables safe right-turning or left-turning) or less from the speed sensor 140 and a signal indicating an operation of turning on a turn signal from the winker switch 142, the control device 200 may control the driving of the vehicle lamp such that the second road surface drawing pattern 165 or the second road surface drawing pattern 167 is emitted. Accordingly, the second road surface drawing pattern can be emitted with good timing at a stage in which the vehicle traveling straight turns right or left at a reduced speed.

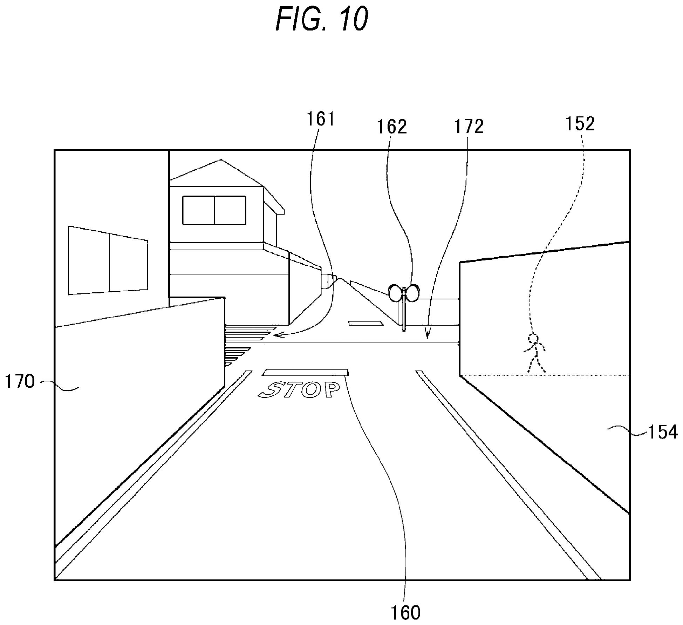

FIG. 10 is a diagram illustrating an example of the captured image including the road condition in front of the vehicle. The captured image illustrated in FIG. 10 includes several features for determining the visibility. For example, in addition to the traffic mirror 162 and the stop line 160 described above, display of "STOP" drawn on the road surface and a crosswalk 161, and an intersecting road 172 between the wall 154 and a house 170 arranged on both sides of the road correspond to the features for discriminating the visibility. The display of "STOP" and the crosswalk 161 is identified from the image-capturing information acquired from the camera unit 12. Further, the intersecting road 172 is detected as a break of the wall 154 by the LiDAR 146. Alternatively, the position of the intersecting road 172 is detected by the GPS 144. Thus, the control device 200 is configured to determines the visibility based on the plurality of pieces of information, thereby improving the accuracy for discriminating the visibility of the road condition.

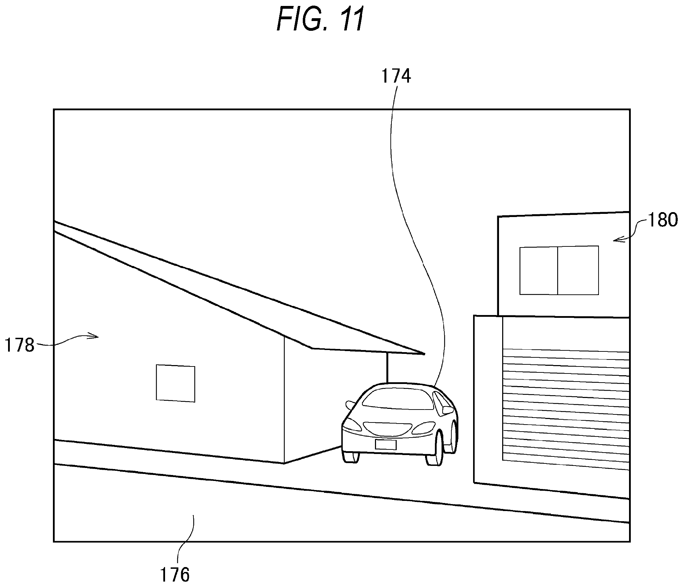

FIG. 11 is a schematic diagram illustrating a case in which a vehicle has parked between houses facing a road. A vehicle 174 illustrated in FIG. 11 has parked in a parking lot between houses 178 and 180 facing a road 176. Therefore, when the vehicle 174 tends to enter the road 176, it is difficult for a driver of the vehicle 174 to notice a vehicle traveling on the road 176. Therefore, the vehicle traveling on the road 176 identifies an interrupted space between the house 178 and the house 180 by the LiDAR 146, and emits the road surface drawing pattern in front of the parking lot. The road surface drawing pattern is, for example, the second road surface drawing pattern 169 illustrated in FIG. 9C that is emitted during straight traveling. Accordingly, the driver of the vehicle 174 is more likely to notice the presence of the vehicle traveling on the road 176.

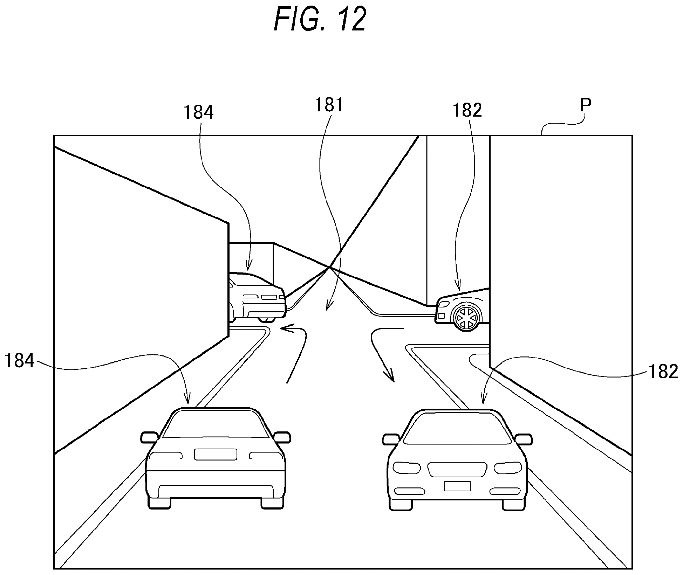

FIG. 12 is a diagram illustrating an example of the captured image including the road condition in front of the vehicle. As described above, the traffic mirror and the sign are included in the captured image as the information indicating the road condition. The traffic mirror and the sign are examples of the target indicating the poor visibility. In addition, the control device 200 can estimate the presence of an intersection with poor visibility by detecting a movement of another vehicle present in front of the host vehicle.

For example, in a case of an intersection with good visibility, by using a captured image obtained by continuously capturing the region in front of the vehicle, it is confirmed that a preceding vehicle appears from an outer edge toward the inside of a captured image P, or that the preceding vehicle disappears from the outer edge toward the outside of the captured image P. On the other hand, at an intersection 181 with poor visibility as illustrated in FIG. 12, a preceding vehicle 182 suddenly appears in the captured image P, or a preceding vehicle 184 suddenly disappears from the captured image P.

Therefore, when the preceding vehicle 184 disappears within a range of the captured image P before moving out of the range of the captured image P, or when the preceding vehicle 182 appears within the range of the captured image P before moving from the outside of the range of the captured image P, the control device 200 determines that there is a region in which the preceding vehicle is hidden, within the range of the captured image P. Therefore, the control device 200 is configured to determine that the visibility is poor on the road captured in the region captured in the captured image P. In addition, the vehicle lamp system 110 can determine a position with poor visibility even without the LiDAR 146.

As described above, the vehicle lamp system 110 according to the second embodiment can allow the pedestrian to easily recognize the presence of the host vehicle at the intersection with poor visibility or the like.

The invention of the control device according to the second embodiment may be regarded as an invention of a vehicle lamp system including a control device and a vehicle lamp. Further, the invention may also be regarded as an invention of a computer-readable medium with a stored program to be executed by a controller capable of controlling a vehicle lamp. By executing the program, the controller controls emission of a road surface drawing pattern to be emitted in a region in front of a vehicle by the vehicle lamp. By executing the program, the lamp ECU 126 or the center ECU 114 executes a step of receiving information indicating a road condition in front of the vehicle, determining visibility of the road condition, and determining the road surface drawing pattern, and when discriminating that the visibility is poor, the lamp ECU 126 or the center ECU 114 executes a step of controlling driving of the vehicle lamp such that a second road surface drawing pattern, which is emitted to a farther position than a first road surface drawing pattern to be emitted under a normal road condition, is emitted.

Further, the control device according to the second embodiment may also be regarded as follows. The control device 200 is a control device that controls a vehicle lamp capable of emitting a road surface drawing pattern in a region in front of a vehicle, and that includes the processor 126a configured to control emission of the road surface drawing pattern. When receiving information indicating a first road condition in front of the vehicle, the processor 126a outputs first instruction information indicating that the LED unit 34 emits the first road surface drawing pattern. Further, when receiving a second road condition having lower visibility than that of the first road condition, the processor 126a outputs second instruction information indicating that the LED unit 34 emits the second road surface drawing pattern which is emitted to the farther position than the first road surface drawing pattern.

That is, the control device 200 that has received the information from the camera unit 12 or the LiDAR 146 can make the road surface drawing pattern emitted on the road surface different when the respective road conditions are different. Further, when the processor 126a receives the second road condition having lower visibility than that of the first road condition, the second road surface drawing pattern that is emitted to the farther position is emitted, so that the pedestrian is more likely to notice the host vehicle even at the intersection with poor visibility.

Although the present invention has been described with reference to the first embodiment and the second embodiment, the present invention is not limited to the first embodiment and the second embodiment, and appropriate combinations and replacements of the configurations according to the first embodiment and the second embodiment are also included in the present invention. Based on the knowledge of those skilled in the art, it is possible to appropriately rearrange the combinations and processing orders in the embodiments, and to make various design changes and other modifications to the first embodiment and the second embodiment, and embodiments to which such modifications are added are also within the scope of the present invention.

Contents disclosed in a Japanese patent application (JP2023-122851) filed on July 27, 2023 and a Japanese patent application (JP2023-128129) filed on August 4, 2023 are appropriately incorporated in the present application.

## Claims

1. A control device for controlling a vehicle lamp configured to emit a light distribution pattern in a region in front of a vehicle, the control device comprising:
a controller configured to control emission of the light distribution pattern,
wherein the controller is configured to control driving of the vehicle lamp such that the light distribution pattern is emitted, the light distribution pattern being determined based on content of a mark on a road sign included in a captured image obtained by capturing the region in front of the vehicle.

2. The control device according to claim 1, further comprising:
an identifying unit configured to identify the content of the mark on the road sign, based on the captured image.

3. The control device according to claim 1 or 2,
wherein in a case where a road sign for causing a driver to recognize a possibility that an object jumps out from a road shoulder to a road is identified, the controller is configured to control the driving of the vehicle lamp such that a road shoulder light distribution pattern is emitted, the road shoulder light distribution pattern having a wider range for illumination on a road shoulder side than a range of a low-beam light distribution pattern or a high-beam light distribution pattern,.

4. The control device according to claim 3,
wherein the controller is configured to control the driving of the vehicle lamp such that the road shoulder light distribution pattern is emitted brighter than the low-beam light distribution pattern or the high-beam light distribution pattern.

5. The control device according to any one of claims 1 to 4,
wherein in a case where a road sign for causing the driver to recognize a situation requiring attention to traveling on the road in front of the vehicle is identified, the controller is configured to control the driving of the vehicle lamp such that a distant light distribution pattern is emitted, the distant light distribution pattern being emitted in a farther region than a region of the low-beam light distribution pattern.

6. The control device according to claim 5,
wherein the controller is configured to control the driving of the vehicle lamp such that the distant light distribution pattern is emitted brighter than the low-beam light distribution pattern or the high-beam light distribution pattern.

7. A vehicle lamp system comprising:
a vehicle lamp configured to emit a light distribution pattern in a region in front of a vehicle; and
a controller configured to control emission of the light distribution pattern,
wherein the controller is configured to control driving of the vehicle lamp such that the light distribution pattern is emitted, the light distribution pattern being determined based on a content of a mark on a road sign included in a captured image obtained by capturing the region in front of the vehicle.

8. The vehicle lamp system according to claim 7,
wherein the vehicle lamp includes a light source in which a plurality of light emitting regions are arranged in a matrix shape, and
the controller is configured to change an illumination state of a part of light emitting regions among the plurality of light emitting regions to form a plurality of light distribution patterns.

9. A non-transitory computer-readable medium storing a program to be executed by a controller, the controller being configured to control emission of a light distribution pattern to be formed in a region in front of a vehicle by a vehicle lamp,
wherein when the program is executed by the controller, the controller is configured to execute a step of controlling driving of the vehicle lamp such that the light distribution pattern is emitted, the light distribution pattern being determined based on the content of a mark on a road sign included in a captured image obtained by capturing the region in front of the vehicle.

10. A control device for controlling a vehicle lamp configured to emit a road surface drawing pattern in a region in front of a vehicle, the control device comprising:
a controller configured to control emission of the road surface drawing pattern,
wherein the controller is configured to receive information indicating a road condition in front of the vehicle, determine visibility of the road condition, and determine the road surface drawing pattern, and
in a case where the controller determines that the visibility is poor, the controller is configured to control driving of the vehicle lamp such that a second road surface drawing pattern is emitted, the second road surface drawing pattern being emitted to a position farther than a position to which a first road surface drawing pattern is emitted under a normal road condition.

11. The control device according to claim 10,
wherein the controller is configured to control the driving of the vehicle lamp such that the second road surface drawing pattern is emitted to an intersecting road in front of the vehicle.

12. The control device according to claim 10 or 11,
wherein the controller is configured to control the driving of the vehicle lamp such that the road surface drawing pattern is emitted, the road surface drawing pattern being selected according to the visibility determined based on at least one piece of information among image-capturing information, vehicle position information, and distance-measuring information on a distance to an object around the vehicle, as the information indicating the road condition in front of the vehicle.

13. The control device according to any one of claims 10 to 12,
wherein in a case where the controller determines that the visibility is poor, the controller is configured to control the driving of the vehicle lamp such that the second road surface drawing pattern whose shape is changed with respect to the first road surface drawing pattern is emitted.

14. The control device according to any one of claims 10 to 13,
wherein in a case where the controller determines that the visibility is poor, the controller is configured to control the driving of the vehicle lamp such that a pattern is emitted the pattern being dynamically emitted as the second road surface drawing pattern.

15. The control device according to claim 12,
wherein in a case where a target indicating the poor visibility is detected from a camera image, the controller is configured to determines that the visibility is poor.

16. The control device according to claim 12,
wherein in a case where a preceding vehicle disappears within a range of a camera image before moving out of the range of the camera image or in a case where the preceding vehicle appears within the range of the camera image before moving from the outside of the range of the camera image, the controller is configured to determines that the visibility is poor.

17. The control device according to any one of claims 10 to 16,
wherein in a case where the controller receives a signal indicating traveling at a predetermined speed or less and a signal indicating an operation of turning on a turn signal in a state where the controller determines that the visibility is poor, the controller is configured to control the driving of the vehicle lamp such that the second road surface drawing pattern is emitted.

18. A control device for controlling a vehicle lamp configured to emit a road surface drawing pattern in a region in front of a vehicle, the control device comprising:
a controller configured to control emission of the road surface drawing pattern,
wherein the controller is configured to:
in a case where the controller receives information indicating a first road condition in front of the vehicle, output first instruction information indicating that the vehicle lamp emits a first road surface drawing pattern, and
in a case where the controller receives a second road condition having lower visibility than a condition of the first road condition, output second instruction information indicating that the vehicle lamp emits a second road surface drawing pattern emitted to a farther position than the first road surface drawing pattern.

19. A vehicle lamp system comprising:
a vehicle lamp configured to emit a road surface drawing pattern in a region in front of a vehicle; and
a controller configured to control driving of the vehicle lamp such that the road surface drawing pattern is emitted,
wherein the controller is configured to receive information indicating a road condition in front of the vehicle, determine visibility of the road condition, and determine the road surface drawing pattern, and
when the controller determines that the visibility is poor, the controller is configured to control the driving of the vehicle lamp such that a second road surface drawing pattern is emitted, the second road pattern being emitted to a farther position than a position to which a first road surface drawing pattern is emitted under a normal road condition.

20. The vehicle lamp system according to claim 19,
wherein the vehicle lamp includes a light source in which a plurality of light emitting regions are arranged in a matrix shape, and
the controller is configured to change an illumination state of a part of light emitting regions among the plurality of light emitting regions to form a plurality of light distribution patterns.

21. A non-transitory computer-readable medium storing a program to be executed by a controller, the controller being configured to control emission of a road surface drawing pattern to be emitted in a region in front of a vehicle by a vehicle lamp,
wherein when the program is executed by the controller, the controller executes a step of receiving information indicating a road condition in front of the vehicle, determining visibility of the road condition, and determining the road surface drawing pattern, and
in a case where the controller determines that the visibility is poor, the controller executes a step of controlling driving of the vehicle lamp such that a second road surface drawing pattern is emitted, the second road surface drawing pattern being emitted to a farther position than a position to which a first road surface drawing pattern is emitted under a normal road condition.
